(19) Europäisches Patentamt
European Patent Office
Office européen des brevets

(11) **EP 3 527 815 A1**

(12) **EUROPEAN PATENT APPLICATION**
published in accordance with Art. 153(4) EPC

(43) Date of publication:
**21.08.2019 Bulletin 2019/34**

(51) Int Cl.:
***F03D 1/04*** (2006.01)

(21) Application number: **17883205.1**

(22) Date of filing: **29.11.2017**

(86) International application number:
**PCT/PE2017/000029**

(87) International publication number:
**WO 2018/117875 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2016 PE 0024972016**

(71) Applicant: **Calle Madrid, Alfredo Raúl Lurigancho, Lima 15 (PE)**

(72) Inventor: **Calle Madrid, Alfredo Raúl Lurigancho, Lima 15 (PE)**

(74) Representative: **Herrero & Asociados, S.L. Cedaceros, 1 28014 Madrid (ES)**

(54) **WIND ENERGY AMPLIFIER IN THE FORM OF A ONE-SHEET HYPERBOLOID**

(57) The One-Sheet Hyperboloid Wind Energy Amplifier amplifies the wind speed exerted on the wind system propeller, by increasing the pressure and speed of naturally occurring wind. It is possible to increase the speed of wind and, consequently, its force and kinetic energy, by continuously channeling a wind flow passing through a "one-sheet hyperboloid" aerodynamic structure, where the wind flow inflow surface is larger than the outflow surface for the same wind flow.

Potential benefits associated with using the Wind Energy Amplifier extend to any wind system intended to harness wind kinetic energy and subsequently convert it into any other type of energy, without being limited or restricted to power generation. However, it is important to note that the greatest potential of the Wind Energy Amplifier lies in improving performance and generating capacity in respect of power produced by wind turbines (power generating windmills).

By using the One-Sheet Hyperboloid Wind Energy Amplifier, wind systems in general can increase wind speed and, consequently, increase the power and performance of a wind system, given a predetermined constant or inconstant kinetic wind energy, enabling an increase in the power generated by any wind system in general.

FIGURE 3

EP 3 527 815 A1

**Description**

**TECHNICAL FIELD**

This developed innovation is to be applied to wind energy because it aims to contribute to the increase and improvement of conversion process of wind kinetic energy into rotational energy for subsequent harnessing through electric generators (wind turbines), pumping systems (wind pumps) or grinding systems (traditional windmill).

This utility model patent, hereinafter referred to as "Wind Energy Amplifier", allows enhancing the performance of any windmill by amplifying the kinetic energy of wind received.

The Wind Energy Amplifier application is very diverse and extends to any existing type of windmill (or wind turbine). This technology has a particularly significant potential in increasing the performance of wind systems for power generation.

For simplification purposes, it is worth mentioning that we will focus on explaining the application and benefits of "Wind Energy Amplifier" through Wind Turbines or wind systems for power generation. This does not limit or restrict the use or application of "Wind Energy Amplifier" to the generation of power.

**STATE OF THE ART**

**1. Basic Definitions**

Wind Energy - Kinetic energy of wind, understood as a constant or inconstant flow of moving air.

Wind system - Mechanism, technology or mill through which wind energy is converted into rotational energy for subsequent harnessing for power generation.

Power of Wind Systems - Determined by wind kinetic energy passing through a given surface in a specific unit of time.

Windmill Rotor - In wind systems, a propeller is the collector that transforms wind kinetic energy into rotational energy, which is transmitted to an electric generator, or to a pumping system or to a grinding system.

**2. Wind Systems**

At present, there are wind systems composed of a set of mechanisms aimed at harnessing wind kinetic energy and transform it into, but not limited to, power, which is achieved through complex systems made up of aerodynamic propellers, rotors, turbines and transformers, among other technical elements.

Below we describe elements and variables that constitute, affect, explain, interfere with and influence, directly or indirectly, in the performance and output of wind systems. In order to explain the state of the art, technology behind wind systems destined to power generation will be used as an example.

**2.1. Fundamentals of Wind Systems**

**2.1.1. Wind Kinetic Energy**

Wind is a mass of air that moves mainly in a horizontal direction from a high-pressure area to a low-pressure area. Every moving mass element has a certain amount of kinetic energy (Ek), which is proportional to its squared velocity (V) and its mass (m), respectively.

$$\text{Ek} = \tfrac{1}{2}. (V)^2 * m$$

**2.1.2. Wind Force**

Wind force is measured not only by wind kinetic energy, but also by the projected and aerodynamic area of the body or element placed against wind movement direction and that correspondingly takes kinetic energy from it. The equation determining wind force is as follows:

$$F = \text{(Dynamic Pressure)} . \text{(Projected Area)} . \text{(Aerodynamic Coefficient)}$$

$$F = \tfrac{1}{2}.p.(V^2).A.Cd$$

Where:

F= Wind force
$p$= Air density
V= Wind speed
A= Projected area of object hit by wind
Cd= Aerodynamic resistance (drag) coefficient of object hit by wind. This determines aerodynamic performance of wind system.

Wind force is physically expressed as kilograms-meters per second squared, or Newtons.

### 2.1.3. Maximum Extractable Power from Wind

Energy passing through a surface (A) in the unit of time is power (P) generated by flow passing through said section. If an energy collector is placed against flow, wind, after passing through it, will reach a speed $V_2$ below $V_1$, which was its original speed (decrease in kinetic energy). The change in flow speed implies that a force is applied to the interposing element.

If we consider wind flow passing through a tube or cylinder, the variable interposing in this flow movement is a rotor disk or propeller perpendicular to the incoming wind direction, which has a speed $V_1$. Air circulating through the tube passes through the rotor, transferring part of its energy, reducing its speed to $V_2$ and setting corresponding pressure difference on both sides.

Maximum extractable power from wind is expressed as follows, with its physical expression in Newtons-meter per second, or Watts:

$$P = \tfrac{1}{2}.p.A.(V^3)$$

Where:

P = Maximum extractable power from wind
$p$= Air density
V= Wind speed
A= Projected area of object hit by wind

Where maximum extractable power (P) per square meter or projected area (A) is expressed as follows:

$$P / A = \tfrac{1}{2}.p.(V^3)$$

Similarly, speed can be expressed as a feature of maximum extractable power (P), air density (p) and projected area (A), with the following equation:

$$V = [(2.P)/(A.p)]^{\wedge(1/3)}$$

### 2.2. Energy Conversion of Wind Systems

In wind systems, the rotor (or propeller) is the collector that transforms wind kinetic energy into mechanical energy, which is transmitted to an electric generator (wind turbines), to a pumping system (wind pumps) or to a grain grinding system (traditional windmill). The main element of a rotor (or propeller) is the blade.

Designing a wind system is a complex process that requires integrating the know-how of different disciplines to convert wind kinetic energy into aerodynamic thrust and subsequent rotational momentum with the least residual wind energy possible. In addition to aerodynamics, structural aspects (static and dynamic) related to efficiency, effectiveness, performance, noise, vibrations, useful life, among others, must be considered. As a first consideration, it is important to know how much power the rotor can generate, starting speed, maximum permissible speed, wind yaw systems, speed and power regulation systems, and so forth.

**2.3. Wind Systems Harnessing Levels and effectively Extractable Power from Wind**

Physics laws prevent to fully harness wind kinetic energy. The maximum extractable power from the wind is defined by the Betz Limit, which establishes that a wind turbine can convert a maximum of 59.26% of kinetic energy from incoming wind into mechanical energy.

Wind energy collected by the wind system rotor is known as harnessed wind energy. Conversion performance is described as the Conversion Coefficient (Cc) defined as the relationship between harnessed wind energy and available kinetic energy. In other words, only a fraction of total wind kinetic energy is converted into mechanical energy.

Incidental variables affecting Conversion Coefficient are not only limited to Betz Limit, but also to aerodynamic losses, gearbox losses, bearing losses, electric generator losses, and others. Notwithstanding the progress achieved linked to harnessing wind kinetic energy and reducing wind system losses, kinetic energy that can be harnessed by the state of the art is around 40% or less.

As a result, we have found that effectively extractable power from wind or Effective Wind System Power (PE) is a fraction, equal to the Conversion Coefficient, of the feature relating to the maximum extractable power from wind, where the formulation of effective wind power is as follows:

$$PE = \tfrac{1}{2}.p.A.(V^3).Cc$$

Where:

PE= Effectively extractable power from wind or Effective Wind System Power
$p$= Air density
V= Wind speed
A= Projected area of object hit by wind
Cc = Conversion Coefficient

**2.4. Technical Aspects of Wind Systems**

**2.4.1. Speed Control System**

Most of today's wind turbines operate at a constant speed: the rotor rotation speed must remain almost constant regardless of the variation in wind speed. Furthermore, a device must be used to limit power and prevent wind turbine from overstress in case of strong winds. These features are performed by the speed control system.

Few wind systems have a yaw speed control system through which the pitch angle is constantly changing. Most systems include fixed blades in a wide wind margin. These methods offer many advantages: they help start the rotor, position the blade leading angle at the optimum operating point, control turns to prevent the generator from overloading, and protect the entire system from damage due to high wind speed.

**2.4.2. Power Regulation**

There are two sections from a power standpoint: one is the connection of the generator to the grid when its turns are at synchronous speed. This condition occurs when there is no excess torque and the power generated is constant. The other one is the rotor speed control, which prevents the generator overpower and the occurrence of damage to the wind system.

**3. Wind Energy Amplification Systems**

State-of-the-art advances and innovations on various wind systems focus on improving the propeller aerodynamics, developing efficiencies to minimize energy losses from mechanisms making up the wind system, optimizing electrical control systems, wind yaw systems, speed control systems, and power regulation systems, and so on. The purpose of these innovations is to enable greater harnessing of wind kinetic energy and, therefore, greater performance and stability in power generation (wind turbines).

However, on the other hand, advances and innovations in the state-of-the-art related to amplifying kinetic energy of naturally occurring wind, which is what ultimately drives the wind system propeller, are limited and do not represent substantial advantages in wind energy amplification.

The relevance of solving this issue lies in the fact that, regardless of the improvements and innovations in effectiveness and efficiency of wind systems per se, amplifying the dynamics of wind kinetic energy would not only increase power and performance of existing wind systems, but would also increase harnessing of available wind resources.

### 3.1. Background on Wind Energy Amplification Systems

The closest wind energy amplification system to the application, found as predecessor in the state-of-the-art, is summarized in the following finding:

Document RO130435 A2 refers to a shielded semi-closed wind system intended to generate power., It consists of a vertical axis turbine shielded in a 270-geometrical-degree portion by a semi-closed cylinder, wherein the shielded turbine offers the advantage of reducing wind resistance, and carries an additional torque to an aerodynamic pseudo-truncated conical wind collection system that converges towards the turbine according to a hyperbolic feature to increase the power of air collection. However, its predecessor does not feature an adequate aerodynamic shape and therefore does not efficiently collect full wind potential. On the other hand, another disadvantage of this predecessor is that it is a separate wind system, and therefore it cannot be coupled to any other existing wind system.

### DESCRIPTION OF INVENTION

As a solution to the limited advances focused on amplifying wind kinetic energy with maximum efficiency, this invention manages to solve this deficiency by coupling a one-sheet hyperboloid amplifier to existing wind systems, potentially improving the performance of wind systems, as a whole, compared to that currently obtained, which is achieved through effective wind energy amplification. In other words, given a certain naturally occurring wind energy and force, by using the One-Sheet Hyperboloid Wind Energy Amplifier, it is possible to increase wind force and speed levels applied to existing wind systems.

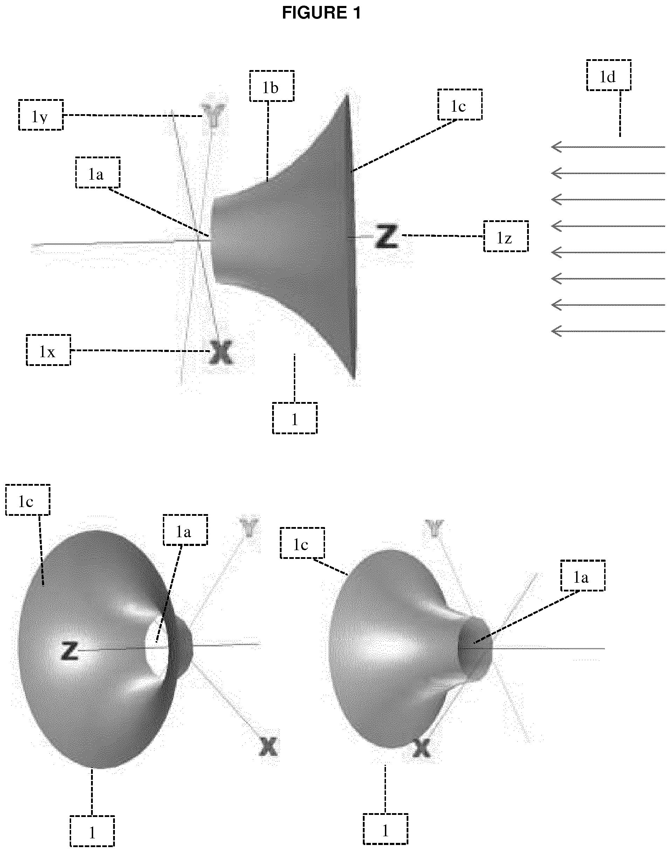

A "one-sheet hyperboloid" means a surface of revolution generated by the rotation of a hyperbola around one of its two axes of symmetry, specifically the one whose revolution generates a related hyperboloid. In addition, it is worth mentioning that the "one-sheet hyperboloid" used in this description refers to an unfinished hyperboloid, halved at the origin of the plane (x, y), i.e. where (z) > 0, the axis (z) being the revolutionized symmetry axis. See Figure 1

This means an improvement in the state-of-the-art, since the One-Sheet Hyperboloid Wind Energy Amplifier, by means of its aerodynamic body, manages to increase the performance of an existing wind system by amplifying the implicit wind energy received by the same wind system.

A One-Sheet Hyperboloid Wind Energy Amplifier amplifies the wind force exerted on the wind system propeller, which is achieved through the increase in pressure and speed of naturally occurring wind. It is possible to increase wind speed and, consequently, its force and kinetic energy, by continuously channeling a wind flow passing through a "one-sheet hyperboloid" (1b) aerodynamic structure, where the wind flow entry (1c) surface is larger than that of the exit for the same wind flow (1a). See Figure 1.

Wind, as a moving air mass, has a certain amount of kinetic energy that is proportional to its mass and exponentially proportional to its speed. Therefore, the following equations governing Force and Effective Power, respectively, shall be considered to describe this invention:

$$F = \tfrac{1}{2}.p.(V^2).A.Cd$$

and

$$PE = \tfrac{1}{2}.p.A.(V^3).Cc$$

Where:

F = Wind force
PE = Effective wind system power
$p$= Air density
V= Wind speed

A= Projected area of object hit by wind

Cc = Conversion Coefficient

Cd= Aerodynamic resistance coefficient of object hit by wind

Wind force is physically expressed as kilograms-meters per second squared, or Newtons. Effective wind power is physically expressed as Newtons-meter per second, or Watts.

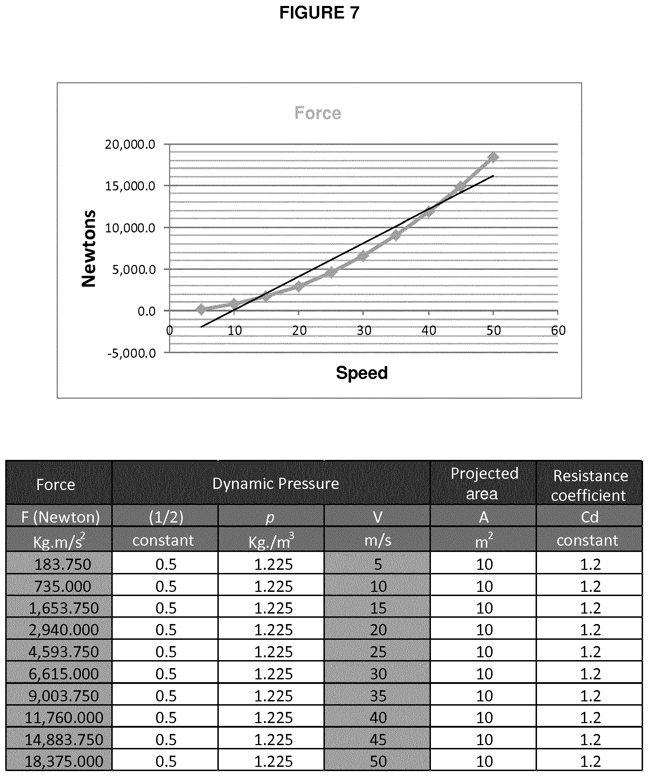

In order to determine the relationship between wind force and wind speed, Figure 7 shows, as an example, calculations of wind force, as a dependent variable, exerted on a wind system propeller, taking as constants air density (1,225 Kg/m$^3$), area projected by the propeller (10 m$^2$), and aerodynamic resistance coefficient (1.2); where wind speed is the only independent variable. These calculations show that when wind speed changes, the changes in the resulting force will be quadratically exponential. This means that the greater the wind speed, the greater the force received on a wind system propeller, ceteris paribus.

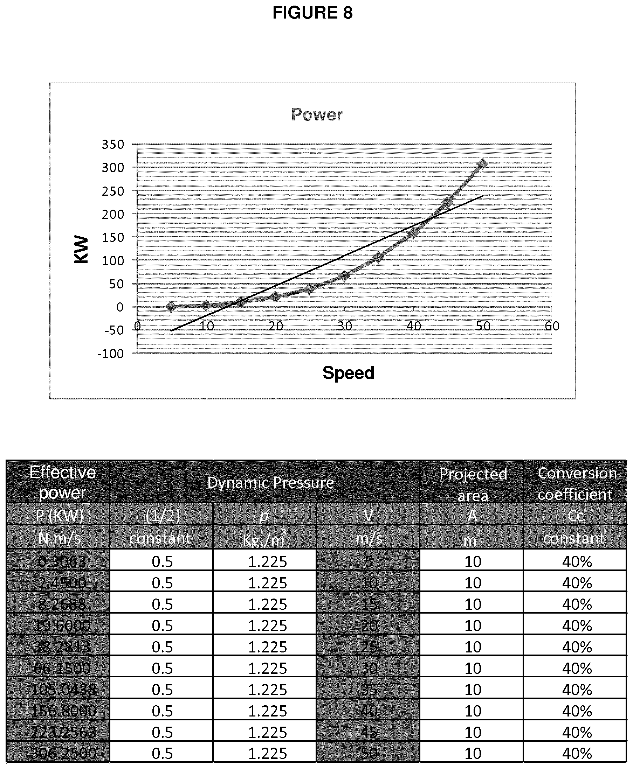

Similarly, in order to determine the relationship between effective power and wind speed, Figure 8 shows, as an example, calculations of effective power, as a dependent variable, of a wind system, taking as constants air density (1,225 kg/m$^3$), area projected by the propeller (10 m$^2$), and conversion coefficient (40%), where wind speed is the only independent variable. These calculations show that when wind speed changes, the changes in the resulting effective power will be cubically exponential. This means that the greater the wind speed, the greater the effective power of the wind system, ceteris paribus.

Having established the exponential and directly proportional relationship of wind speed with respect to effective wind power and force, the effect that the One-Sheet Hyperboloid Wind Energy Amplifier has on wind speed is established below.

Assuming for the same wind system that the conversion coefficient (Cc), air density (p), projected area (A) and resistance coefficient (Cd) are constant, the variable manipulated by the One-Sheet Hyperboloid Wind Energy Amplifier would be wind speed (V). That is to say, the Wind Energy Amplifier, through its effect on the dynamic flow of wind, amplifies the wind force applied on the wind system propeller. It is worth mentioning that the One-Sheet Hyperboloid Wind Energy Amplifier has itself a projected area (A) and resistance coefficient (Cd). In other words, both the One-Sheet Hyperboloid Wind Energy Amplifier and the wind system, since they are complementary but different components, do not share the same projected areas and resistance coefficients, so each of these elements must be calculated separately.

Additionally, as the Wind Energy Amplifier dimensions become larger, the resistance coefficient (or drag) will also increase until getting close to the 2.0 limit (resistance coefficient of a flat body perpendicular to the wind). In other words, the greater the extension and projected area of the One-Sheet Hyperboloid Wind Energy Amplifier, the greater the resistance coefficient. So as to simplify this explanation, and with the sole purpose of explaining more clearly the Wind Energy Amplifier effects, we will use a single resistance coefficient (1.4) for all projected areas of the same One-Sheet Hyperboloid Wind Energy Amplifier.

First, we will assume the presence of a windmill with the following characteristics under specific atmospheric variables, where the wind force on, and the effective windmill power in question result from the following constants: windmill projected area (10 m$^2$), windmill rotor radius (1.78 m), windmill resistance coefficient (0.8), windmill conversion coefficient (30%), air density (1,225 kg/m$^2$), wind speed (10 m/s). Windmill-related assumptions and initial calculations are summarized in Table 01.

**Table 01**

| Force exerted on windmill | Dynamic Wind Pressure | | | Windmill Projected Area | Windmill Resistance Coefficient | Windmill Rotor Radius |
|---|---|---|---|---|---|---|
| F (Newtons) | (1/2) | p | V | A | Cd | r |
| Kg.m/s$^2$ | Constant | Kg./m$^3$ | m/s | m$^2$ | Constant | m |
| 490.0 | 0.5 | 1,225 | 10 | 10 | 0.8 | 1.78 |

| Effective Windmill Power | Dynamic Wind Pressure | | | Windmill Projected Area | Windmill Conversion Coefficient | Windmill Rotor Radius |
|---|---|---|---|---|---|---|
| KW | (1/2) | p | V | A | Cc | r |
| 1000N.m/s | Constant | Kg/m$^3$ | m/s | m$^2$ | Constant | m |
| 1.8 | 0.5 | 1,225 | 10 | 10 | 30% | 1.78 |

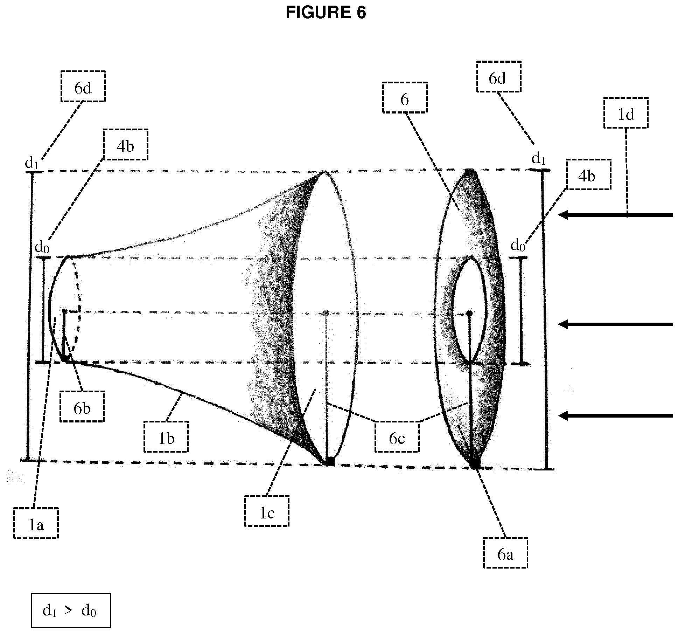

Second, assuming a "hollow flat disk" (6) perpendicular to the direction of the wind (1d), with a diameter (6d) greater than the windmill propeller (4b) diameter indicated above, but with a hole in the middle the size of the windmill propeller (4b) diameter in question, so that the "hollow flat disk" projected area (6a) is inconstant and dependent on the radius related to it (6c), which must always be greater than the windmill rotor radius (6b). See Figure 6.

In order to determine the "hollow flat disk" wind force, Table 02 shows theoretical calculations of wind force (as a dependent variable) exerted on the "hollow flat disk", taking as constants air density (1,225 Kg/m$^3$), wind speed (10 m/s), aerodynamic resistance coefficient (2.0); where the "hollow flat disk" projected area is the only independent variable, ceteris paribus.

**Table 02**

| | Force on Flat Disk | Dynamic Wind Pressure | | | Flat Disk Projected Area | Flat Disk Resistance Coefficient | Flat Disk Radius |
|---|---|---|---|---|---|---|---|
| | F (Newtons) | (1/2) | $p$ | V | A | Cd | r |
| | Kg.m/s$^2$ | Constant | Kg/m$^3$ | m/s | m$^2$ | Constant | m |
| 1 | **1,225.0** | 0.5 | 1,225 | 10 | **10** | 2.0 | **2.52** |
| 2 | **2,450.0** | 0.5 | 1,225 | 10 | **20** | 2.0 | **3.09** |
| 3 | **3,675.0** | 0.5 | 1,225 | 10 | **30** | 2.0 | **3.57** |
| 4 | **4,900.0** | 0.5 | 1,225 | 10 | **40** | 2.0 | **3.99** |
| 5 | **6,125.0** | 0.5 | 1,225 | 10 | **50** | 2.0 | **4.37** |
| 6 | **7,350.0** | 0.5 | 1,225 | 10 | **60** | 2.0 | **4.72** |
| 7 | **8,575.0** | 0.5 | 1,225 | 10 | **70** | 2.0 | **5.05** |
| 8 | **9,800.0** | 0.5 | 1,225 | 10 | **80** | 2.0 | **5.35** |
| 9 | **11,025.0** | 0.5 | 1,225 | 10 | **90** | 2.0 | **5.64** |
| 10 | **12,250.0** | 0.5 | 1,225 | 10 | **100** | 2.0 | **5.92** |

Third, assuming a One-Sheet Hyperboloid Wind Energy Amplifier perpendicular to the direction of the wind (1d), whose wind entry radius must be greater than the windmill propeller radius indicated above (4b), but equal to the "hollow flat disk" radius (6c), and where the wind exit diameter must be equal to the size of the windmill propeller diameter in question, so that the One-Sheet Hyperboloid Wind Energy Amplifier projected area (and radius) are identical to the "hollow flat disk" projected area (and radius) described in the preceding paragraph. See Figure 6.

In order to determine the One-Sheet Hyperboloid Wind Energy Amplifier wind force, Table 03 shows theoretical calculations of wind force (as a dependent variable) exerted on the Wind Energy Amplifier, taking as constants air density (1,225 Kg/m$^3$), wind speed (10 m/s), aerodynamic resistance coefficient (1.4); where the Wind Energy Amplifier projected area is the only independent variable, ceteris paribus. Also, note that the Wind Energy Amplifier resistance coefficient (1.4) is lower than the "hollow flat disk" resistance coefficient (2.0), but greater than the windmill resistance coefficient (0.8).

**Table 03**

| | Force on Amplifier | Dynamic Wind Pressure | | | Amplifier Projected Area | Amplifier Resistance Coefficient | Amplifier Radius |
|---|---|---|---|---|---|---|---|
| | F (Newtons) | (1/2) | $p$ | V | A | Cd | r |
| | Kg.m/s$^2$ | Constant | Kg./m$^3$ | m/s | m$^2$ | Constant | m |
| 1 | **857.5** | 0.5 | 1,225 | 10 | **10** | 1.4 | **2.52** |
| 2 | **1,715.0** | 0.5 | 1,225 | 10 | **20** | 1.4 | **3.09** |
| 3 | **2,572.5** | 0.5 | 1,225 | 10 | **30** | 1.4 | **3.57** |
| 4 | **3,430.0** | 0.5 | 1,225 | 10 | **40** | 1.4 | **3.99** |
| 5 | **4,287.5** | 0.5 | 1,225 | 10 | **50** | 1.4 | **4.37** |

(continued)

| | | Force on Amplifier | Dynamic Wind Pressure | | | Amplifier Projected Area | Amplifier Resistance Coefficient | Amplifier Radius |
|---|---|---|---|---|---|---|---|---|
| | | F (Newtons) | (1/2) | $p$ | V | A | Cd | r |
| | | Kg.m/s$^2$ | Constant | Kg./m$^3$ | m/s | m$^2$ | Constant | m |
| | 6 | **5,145.0** | 0.5 | 1,225 | 10 | **60** | 1.4 | **4.72** |
| | 7 | **6,002.5** | 0.5 | 1,225 | 10 | **70** | 1.4 | **5.05** |
| | 8 | **6,860.0** | 0.5 | 1,225 | 10 | **80** | 1.4 | **5.35** |
| | 9 | **7,717.5** | 0.5 | 1,225 | 10 | **90** | 1.4 | **5.64** |
| | 10 | **8,575.0** | 0.5 | 1,225 | 10 | **100** | 1.4 | **5.92** |

It is worth mentioning that, although the Wind Energy Amplifier and the "hollow flat disk" share the same projected areas, their differences in resistance coefficients explain the differences in wind forces exerted on each element respectively, where the force exerted by the wind on the Amplifier is lower than the force exerted by the wind on the "hollow flat disk". This means that the Wind Energy Amplifier subtracts (or absorbs) a smaller amount of wind kinetic energy compared to the "hollow flat disk", which allows the difference between this kinetic energy to be preserved by the movement of air itself. This also implies that the amount of energy preserved by the wind is, as a consequence of the Wind Energy Amplifier aerodynamic shape, responsible for the increased dynamic pressure exerted on the air mass as it moves towards the One-Sheet Hyperboloid Wind Energy Amplifier exit, which results in an increase in wind speed.

Thus, we have found that the force differential between wind force exerted on the Wind Energy Amplifier and on the "hollow flat disk" corresponds to additional kinetic energy preserved by the wind, which is eventually transferred to the windmill propeller when the air moves towards the Wind Energy Amplifier exit. See Table 04.

**Table 04**

| | | Force Differential | Kinetic Energy Transfer Coefficient | Wind Force on the Windmill | Wind Force Amplification on the Windmill | |
|---|---|---|---|---|---|---|
| | | F (Newtons) | Cket | F (Newtons) | F (Newtons) | Increase |
| | | Kg.m/s$^2$ | Constant | Kg.m/s$^2$ | Kg.m/s$^2$ | % |
| | 1 | 367.5 | 0.30 | 490.0 | **857.5** | **75%** |
| | 2 | 735.0 | 0.30 | 490.0 | **1,225.0** | **150%** |
| | 3 | 1,102.5 | 0.30 | 490.0 | **1,592.5** | **225%** |
| | 4 | 1,470.0 | 0.30 | 490.0 | **1,960.0** | **300%** |
| | 5 | 1,837.5 | 0.30 | 490.0 | **2,327.5** | **375%** |
| | 6 | 2,205.0 | 0.30 | 490.0 | **2,695.0** | **450%** |
| | 7 | 2,572.5 | 0.30 | 490.0 | **3,062.5** | **525%** |
| | 8 | 2,940.0 | 0.30 | 490.0 | **3,430.0** | **600%** |
| | 9 | 3,307.5 | 0.30 | 490.0 | **3,797.5** | **675%** |
| | 10 | 3,675.0 | 0.30 | 490.0 | **4,165.5** | **750%** |

Note that the Kinetic Energy Transfer Coefficient (Cket) results from dividing the force differential by the wind force exerted on the "hollow flat disk", being this coefficient the same for all cases included in this explanation. This means that the Kinetic Energy Transfer Coefficient represents the portion of kinetic energy transferred to the windmill rotor, given a certain dimension and resistance coefficient of the Wind Energy Amplifier.

It is important to mention that the Kinetic Energy Transfer Coefficient will vary depending on differences between the Wind Energy Amplifier resistance coefficient and that of the "hollow flat disk". In other words, the greater the difference, the greater the Kinetic Energy Transfer Coefficient, and vice versa. Since the "hollow flat disk" resistance coefficient is always the same (2.0), we can conclude that the Kinetic Energy Transfer Coefficient is a feature of, and inversely proportional to, the Wind Energy Amplifier resistance coefficient. From the above we deduce that the Kinetic Energy Transfer Coefficient can be represented by the following equation:

$$Cket = 1 - [Cd_{(Wind\ Energy\ Amplifier)} / Cd_{(Flat\ Disk)}]$$

or

$$Cket = 1 - [Cd_{(Wind\ Energy\ Amplifier)} / 2.0]$$

Where,

Cket = Kinetic Energy Transfer Coefficient
$Cd_{(wind\ Energy\ Amplifier)}$ = Wind Energy Amplifier Resistance Coefficient
$Cd_{(Flat\ Disk)}$ = Flat Disk Resistance Coefficient

Therefore, the better the Wind Energy Amplifier aerodynamic factor, the greater the kinetic energy transferable to the windmill propeller.

It is worth noting that the range of amplification of the force exerted on the windmill propeller, given the same Kinetic Energy Transfer Coefficient, will depend on the dimension of the Wind Energy Amplifier projected area. That is, the larger the Wind Energy Amplifier projected area, the greater the wind energy amplifying effect exerted on the windmill propeller. To simplify calculations, it is important to remember that, as stated in a previous paragraph, the same resistance coefficient was applied to any dimension of Wind Energy Amplifier. In practice, One-Sheet Hyperboloid Wind Energy Amplifier resistance coefficients are higher as Wind Energy Amplifier dimensions increase. Therefore, the One-Sheet Hyperboloid Wind Energy Amplifier effects will have a decreasing performance as its dimensions increases.

Wind kinetic energy amplifying effect produced by the One-Sheet Hyperboloid Wind Energy Amplifier, is achieved by increasing the dynamic pressure, given a constant air density, leading to an increased wind speed received by the windmill (Amplified Speed), as defined by the following equation:

$$V_{(Amplified)} = V_{(Not\ Amplified)} \cdot [1 + (A_{(Amplifier)} \cdot 2 \cdot Cket) / (A_{(Windmill)} \cdot Cd_{(Windmill)})]^{\wedge(1/2)}$$

Where:

$V_{(Amplified)}$ = Amplified wind speed received by windmill rotor
$V_{(Not\ Amplified)}$ = Speed of naturally occurring wind
$A_{(Amplifier)}$ = Wind Energy Amplifier Projected Area
$A_{(Windmill)}$ = Windmill rotor projected area
$Cd_{(Windmill)}$ = Windmill aerodynamic resistance coefficient
Cket = Kinetic Energy Transfer Coefficient

This way, in order to determine the wind speed increase received by the windmill (Amplified Speed) through the One-Sheet Hyperboloid Wind Energy Amplifier, Table 05 shows Amplified Speed calculations (as a dependent variable) resulting from force differentials and increased dynamic pressure produced by the Wind Energy Amplifier, taking as constants air density (1,225 Kg/m³), projected area (10 m²) and aerodynamic resistance coefficient (0.8), where the Amplified Force on the windmill is the only independent variable.

**Table 05**

| | Amplified Force on Windmill | Windmil l Projected Area | Windmill Resistance Coefficient | Dynamic Pressure Amplified by Wind Energy Amplifier | | | Wind Speed Amplification |
|---|---|---|---|---|---|---|---|
| | F (Newtons) | A | Cd | (1/2) | P | v | Increase |
| | Kg.m/s$^2$ | m$^2$ | Constant | Constant | Kg/m$^3$ | m/s | % |
| 1 | 857.5 | 10 | 0.8 | 0.5 | 1,225 | **13.2** | **32%** |
| 2 | 1,225.0 | 10 | 0.8 | 0.5 | 1,225 | **15.8** | **58%** |
| 3 | 1,592.5 | 10 | 0.8 | 0.5 | 1,225 | **18.0** | **80%** |
| 4 | 1,960.0 | 10 | 0.8 | 0.5 | 1,225 | **20.0** | **100%** |
| 5 | 2,327.5 | 10 | 0.8 | 0.5 | 1,225 | **21.8** | **118%** |
| 6 | 2,695.0 | 10 | 0.8 | 0.5 | 1,225 | **23.5** | **135%** |
| 7 | 3,062.5 | 10 | 0.8 | 0.5 | 1,225 | **25.0** | **150%** |
| 8 | 3,430.0 | 10 | 0.8 | 0.5 | 1,225 | **26.5** | **165%** |
| 9 | 3,797.5 | 10 | 0.8 | 0.5 | 1,225 | **27.8** | **178%** |
| 10 | 4,165.0 | 10 | 0.8 | 0.5 | 1,225 | **29.2** | **192%** |

Table 06 shows the effect of increased wind speed on the effective windmill power (PE). As can be seen, given the exponential relationship between effective wind power and speed, small increases in wind speed generate significant increases in effective power. In other words, the One-Sheet Hyperboloid Wind Energy Amplifier has a significant effect on the effective power generated by a windmill by increasing the dynamic pressure and wind speed.

**Table 06**

| | Force Differential | Kinetic Energy Transfer Coefficient | Effective Windmill Power | Windmill Power Amplification | | |
|---|---|---|---|---|---|---|
| | F (Newtons) | Cket | KW | V | KW | Increase |
| | Kg.m/s$^2$ | Constant | 1000.N.m/s | m/s | 1000.N.m/s | % |
| 1 | 367.5 | 0.3 | 1.8 | **13.2** | **4.3** | **132%** |
| 2 | 735.0 | 0.3 | 1.8 | **15.8** | **7.3** | **295%** |
| 3 | 1,102.5 | 0.3 | 1.8 | **18.0** | **10.8** | **486%** |
| 4 | 1,470.0 | 0.3 | 1.8 | **20.0** | **14.7** | **700%** |
| 5 | 1,837.5 | 0.3 | 1.8 | **21.8** | **19.0** | **935%** |
| 6 | 2,205.0 | 0.3 | 1.8 | **23.5** | **23.7** | **1190%** |
| 7 | 2,572.5 | 0.3 | 1.8 | **25.0** | **28.7** | **1463%** |
| 8 | 2,940.0 | 0.3 | 1.8 | **26.5** | **34.0** | **1752%** |
| 9 | 3,307.5 | 0.3 | 1.8 | **27.8** | **39.6** | **2058%** |
| 10 | 3,675.0 | 0.3 | 1.8 | **29.2** | **45.5** | **2378%** |

In conclusion, the effect of the One-Sheet Hyperboloid Wind Energy Amplifier on wind kinetic energy amplification is enabled by two elements: (1) size of Wind Energy Amplifier projected area, and (2) aerodynamic form of the same Wind Energy Amplifier. In other words, any increase in wind speed achievable by the One-Sheet Hyperboloid Wind Energy Amplifier will depend on the size and aerodynamic shape of the Wind Energy Amplifier used, and also on the prevailing particular characteristics of the wind and circumstances surrounding a given wind energy system.

According to preliminary calculations, the One-Sheet Hyperboloid Wind Energy Amplifier would enable an increase in wind speed, exerted on the wind system propeller, by at least 20%, since the maximum achievable amplification is indeterminate (but not infinite), as it will depend on the respective configurations of projected area and Wind Energy Amplifier resistance coefficient, as well as the dimensions of the modified (or amplified) windmill rotor. It is important to remember that, as mentioned above, the maximum wind speed amplification, resulting from the use of the Wind Energy Amplifier, is limited by the increasing curve of the Wind Energy Amplifier resistance coefficient. Therefore, the greater the extension and projected area of the One-Sheet Hyperboloid Wind Energy Amplifier, the greater the resistance coefficient.

In other words, although a larger projected area of the Wind Energy Amplifier is better than a smaller one, it is important to consider that from a specific point on, larger Wind Energy Amplifier projected areas begin to show decreasing performance. Therefore, to select the optimum size of a One-Sheet Hyperboloid Wind Energy Amplifier, it is important to find the turning point of said relationship between projected area and resistance coefficient.

In short, by using the One-Sheet Hyperboloid Wind Energy Amplifier, wind systems in general can increase the wind force and speed applied to the rotor propeller and, therefore, increase the power and performance of a wind turbine, given a determined constant or inconstant wind kinetic energy, enabling an increase in power generated by a specific wind system.

In this sense, the One-Sheet Hyperboloid Wind Energy Amplifier solves the technical issue related to low harnessing of potential wind kinetic energy, in such a way that by using a One-Sheet Hyperboloid Wind Energy Amplifier in a given wind system, wind speed will be amplified and, therefore, the available wind kinetic energy will be better harnessed, also the power and performance of the wind system in question will be increased.

## BRIEF DESCRIPTION OF FIGURES

### FIGURE 1: One-Sheet Hyperboloid Wind Energy Amplifier Aerodynamic Body

1. Wind Energy Amplifier
1a. Wind exit
1b. Amplifier Aerodynamic Body
1c. Wind entry
1d. Wind direction
1x. Cartesian axis X (one-dimensional drawing)
1y. Cartesian axis Y (two-dimensional drawing)
1z. Cartesian axis Z (three-dimensional drawing)

### FIGURE 2: Some Examples of One-Sheet Hyperboloid Wind Energy Amplifier

2a. One-sheet hyperboloid with a circular entry
2b. One-sheet hyperboloid with a square entry

### FIGURE 3: Wind Energy Amplifier placed in front of a windmill

3a. Front View
3b. Side View
3c. Oblique View
3d. Supporting Structure or Securing Element
3e. Windmill

### FIGURE 4: Cross-Section of Exit Turbulence Suppressor

4. Exit Turbulence Suppressor
4a. Exit Turbulence Suppressor cylindrical shape diameter
4b. Windmill propeller diameter
4c. Exit Turbulence Suppressor Length
3e. Windmill
1a. Wind exit
1b. Amplifier Aerodynamic Body

### FIGURE 5: Cross-Section of Entry Turbulence Suppressor

5. Entry Turbulence Suppressor
5a. Leading edge curvature radius
5b. Chord
5c. Average curvature line
5d. Outer edge
5e. Outer edge of Exit Turbulence Suppressor
5f. Outer edge of Amplifier Aerodynamic Body or wind entry edge.
5g. Leading edge
1b. Amplifier Aerodynamic Body

**FIGURE 6: Hollow Flat Disk and Wind Energy Amplifier**

6. Hollow Flat Disk
6a. Hollow Flat Disk Projected Area
6b. Windmill rotor radius
6c. Hollow Flat Disk Radius
6d. Hollow Flat Disk diameter (wind entry diameter)
1a. Wind exit
1b. Amplifier Aerodynamic Body
1c. Wind entry
4b. Windmill propeller diameter (wind exit diameter)

**FIGURE 7:** Wind force calculations.

**FIGURE 8:** Effective power calculations.

**PREFERRED EMBODIMENTS OF INVENTION**

**1. Wind Energy Amplifier Components**

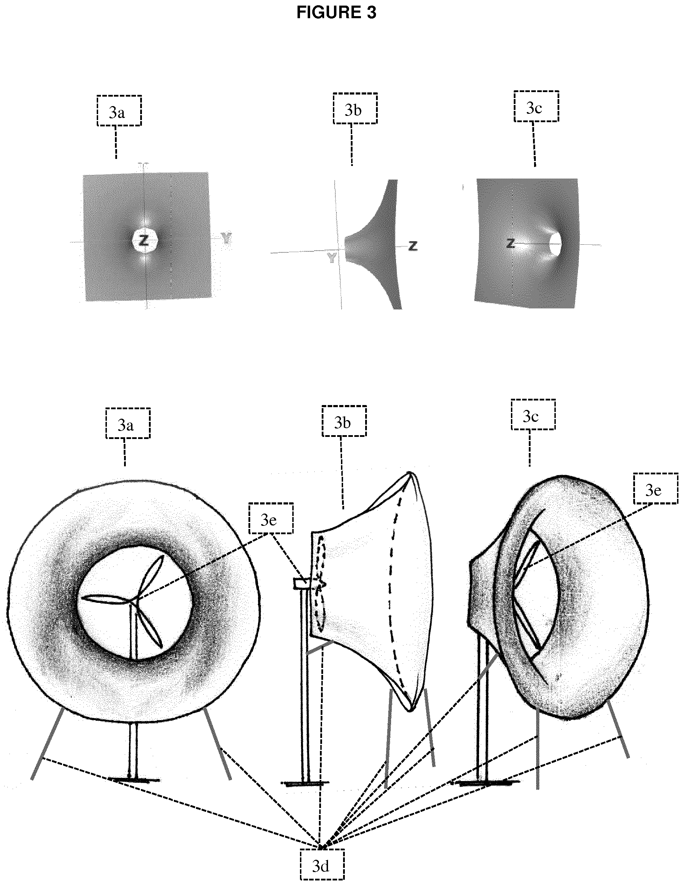

The One-Sheet Hyperboloid Wind Energy Amplifier, which is installed in front of a windmill (see Figure 3), amplifies wind speed, enabling an increase in wind flow pressure as it passes through the Wind Energy Amplifier in question. This is achieved by the Wind Energy Amplifier aerodynamic structure components, which are detailed below:

**A. Amplifier Aerodynamic Body:** An increased wind pressure, and therefore an increased wind force, can be achieved by channeling a wind flow passing through a rigid aerodynamic structure, where the surface (or projected area) of the wind entry (1c) is greater than the surface (or projected area) of the wind exit (1a) of the aerodynamic structure in question. The aerodynamic structure geometric shape described is a "one-sheet hyperboloid" (1b). See Figure 1.

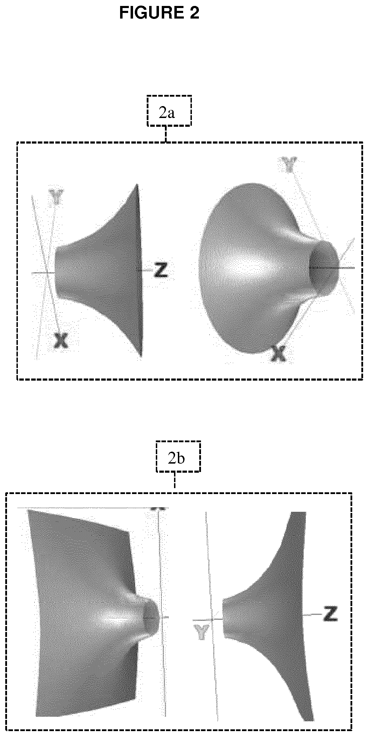

It is worth mentioning that the two-dimensional shape of the Amplifier Aerodynamic Body (1b) entry (1c) can have any of the following geometric shapes (see Figure 2), without being limited to: circular shape (2a), square shape (2b). Both of these shapes are compatible with the hyperboloid formulation proposed in this section. The entry dimensions can be infinite and will depend on the amplifying range of wind kinetics sought.

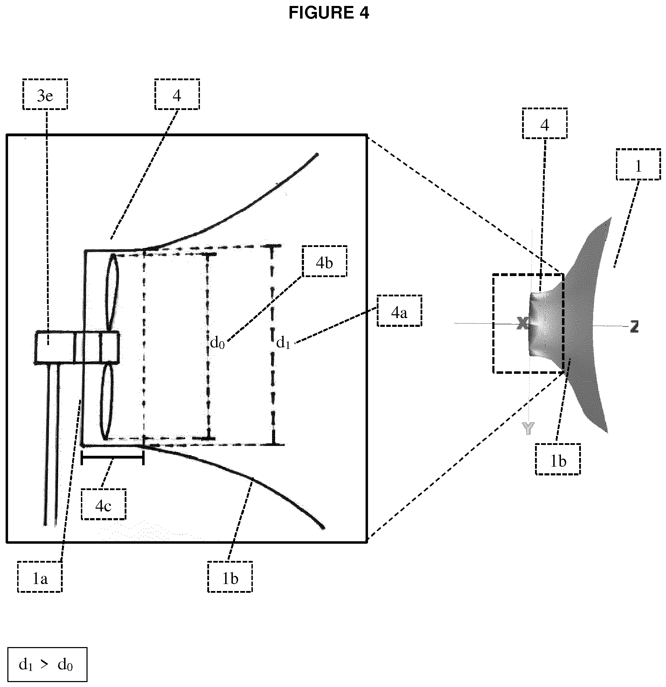

As for the two-dimensional shape of the Amplifier Aerodynamic Body exit (1a), it must be circular to prevent any losses of wind energy exerted on the wind system propeller. The exit must be larger than the diameter covered by the wind system propeller (4b), but equal to the Exit Turbulence Suppressor (4a) diameter. See Figure 04.

The main feature of the Amplifier Aerodynamic Body is to increase pressure, speed and, finally, wind force. The general equation, in Cartesian coordinates, governing the shape of the One-Sheet Hyperboloid Amplifier Aerodynamic Body is as follows, but not limited to:

$$(x^2)/a + (y^2)/a - (z^{(exponential)})/a - 1 = 0, \quad a > 0, z > 0, (exponential) > 0$$

Where:

- (x, y, z) are Cartesian coordinates that make up the Wind Energy Amplifier dimension, where (x, y, z) are interdependent.

- (x, y) determine the Wind Energy Amplifier range, which is interdependent of (z), where (x, y) can be any real number.
- (z) determines the Wind Energy Amplifier extension or length, such extension or length being interdependent of (x, y), where (z) is always greater than zero.
- (a) is a constant, greater than zero, which influences the wind exit size and the circular shape of the Wind Energy Amplifier.
- (Exponential) determines the shape of the one-sheet hyperboloid, unfinished at the origin, being able to configure infinite hyperbolic shapes, where (exponential) acquires values greater than zero such as, but not limited to: (2), ($\pi$), (e), log2(n), log2(z), ln(z), ln(k. z), acos(n), atan(n); where "n" is a natural number greater than zero, "k" is a constant greater than zero, "z" is the same variable (z) repeated in the exponential.

This way, the One-Sheet Hyperboloid Wind Energy Amplifier, unfinished at the origin, would have the following formulations, without being limited to:

$$(x^2)/a + (y^2)/a - (z^2)/a - 1 = 0$$

$$(x^2)/a + (y^2)/a - (z^{(\pi)})/a - 1 = 0$$

$$(x^2)/a + (y^2)/a - (z^{(e)})/a - 1 = 0$$

$$(x^2)/a + (y^2)/a - (z^{log2(n)})/a - 1 = 0$$

$$(x^2)/a + (y^2)/a - (z^{ln(z)})/a - 1 = 0$$

$$(x^2)/a + (y^2)/a - (z^{ln(k.z)})/a - 1 = 0$$

**B. Exit Turbulence Suppressor:** Cylindrical and rigid component attached to the exit (1a) of the Amplifier Aerodynamic Body, allowing a better flow and movement of the outgoing wind that, as it moves, leaves behind the Amplifier Aerodynamic Body (1b) after passing through it. It is worth mentioning that this cylindrical section must surround the windmill propeller. A cross-section of the Exit Turbulence Suppressor is shown in Figure 4.

The main feature of the Exit Turbulence Suppressor (4) is to prevent any turbulence that may occur on the wind system propeller (3e) as the wind flow leaves the body and passes through the exit (1a).

The two-dimensional shape of the Exit Turbulence Suppressor (4), seen from a cross-section, must have the same shape as the wind exit (1a), i.e. a circular shape, in order to avoid any losses of wind energy exerted on the wind system propeller. The diameter dimension of the Exit Turbulence Suppressor (4a) cylindrical shape must be larger than the diameter covered by the wind system propeller (4b), but close enough to that same diameter to minimize wind energy losses. The length of the Exit Turbulence Suppressor (4) should be long enough to cover the entire length of the windmill rotor (4c) without exceeding it.

The general equation in Cartesian coordinates, governing the Exit Turbulence Suppressor shape is that of a straight cylinder:

$$(x^2)/a + (y^2)/a - 1 = 0, a > 0, z > 0$$

Where:

- (x, y) are Cartesian coordinates that make up the Exit Turbulence Suppressor dimension, where (x, y) are interdependent and can be any real number.
- (z) determines the Exit Turbulence Suppressor extension, which is independent of (x, y), where (z) can only be numbers below the value (z) of the Amplifier Aerodynamic Body, but greater than zero, where the maximum value must be equal to the minimum value (z) of the Amplifier Aerodynamic Body, so that both values coincide.

- (a) is a constant, greater than zero, which modifies and determines the Exit Turbulence Suppressor cylindrical shape diameter.

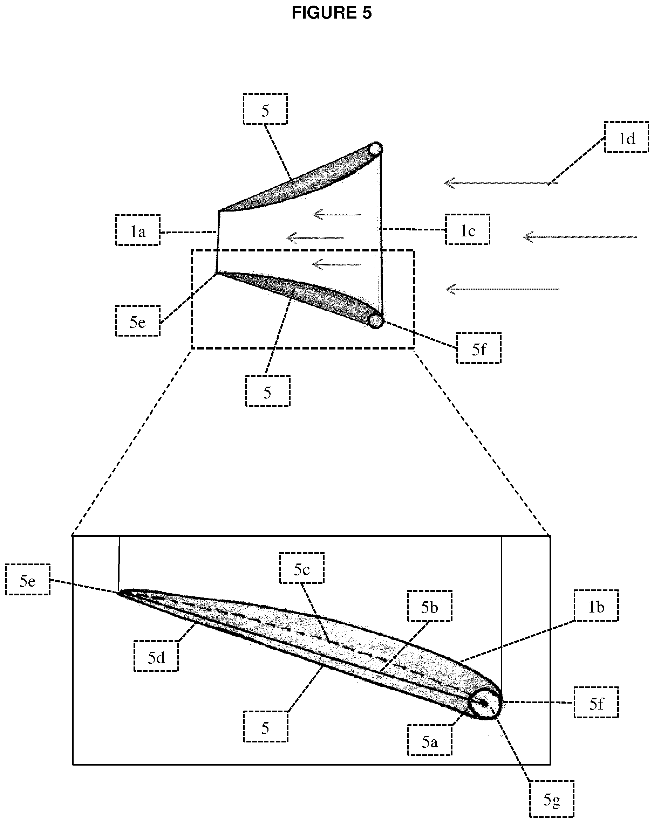

   **C. Entry Turbulence Suppressor:** Aerodynamic and rigid component, attached to the entry of the Amplifier Aerodynamic Body (1b), allowing a better flow and movement of excess wind that, as it moves, leaves the Amplifier Aerodynamic Body (1b) surrounding the latter. It is important to note that the Entry Turbulence Suppressor extends from the outer edge of the Amplifier Aerodynamic Body entry (5f) to the outer edge of the Exit Turbulence Suppressor exit (5e), connecting both points through an outer edge (5d) and a leading edge (5g) of a specific radius (5a), externally surrounding the Amplifier Aerodynamic Body (1b). The distance between points 5e and 5f is known as Chord (5b), where the average curvature line length (5c) is greater than the chord length (5b). A cross-section of the Entry Turbulence Suppressor is shown in Figure 5.
   The main feature of the Entry Turbulence Suppressor is to reduce the turbulence that may occur when wind flow moves into the entry of the Amplifier Aerodynamic Body, as well as to reduce any turbulence around the Amplifier Aerodynamic Body itself.

   **D. Supporting Structure or Securing Element:** Supporting component of the Wind Energy Amplifier, which may consist of a single support or fixing element, or more than one supporting or securing element (3d) depending on the conditions required by engineering in order to support the weight and firmly hold the One-Sheet Hyperboloid Wind Energy Amplifier in its position in front of the windmill. Securing elements shown in Figure 3 are for reference purposes only and are not intended to suggest or define a particular way or shape of the Wind Energy Amplifier Supporting Structure or Securing Element.

The specific engineering applied to construction, implementation and installation of the One-Sheet Hyperboloid Wind Energy Amplifier Supporting Structure or Securing Element is not covered by this utility model patent and must be determined by engineers responsible for its installation based on surface geology, wind system size, Wind Energy Amplifier dimensions, wind force characteristics, strength of materials, wind system movement on its axis, etc.

## 2. Innovation Preferred Applications

By using the described One-Sheet Hyperboloid Wind Energy Amplifier, wind systems in general can amplify wind energy with a same kinetic energy of naturally occurring wind. As a result, power generating wind systems, for example, will benefit from the following advantages:

- **Higher Performance.** Given the wind amplification achieved using the Wind Energy Amplifier, current wind systems can have a greater performance and, therefore, generate more power with the same constant or inconstant kinetic energy from the naturally occurring wind.

- **Lower Investment.** The wind amplification achieved using the Wind Energy Amplifier, with the same given constant or inconstant kinetic energy produced by naturally occurring wind, enables to generate the same amount of power using wind systems that are smaller than those currently used.

In general, potential benefits of the use or application of the One-Sheet Hyperboloid Wind Energy Amplifier extend to any type of wind system intended to harness kinetic energy from the wind and converting it into power, or any other type of mechanical energy.

The One-Sheet Hyperboloid Wind Energy Amplifier can be used for different purposes and in any type of windmill. This technology is particularly relevant to the increase in power and performance of wind systems intended for power generation.

## 3. Hyperboloid Innovation

Selecting the most suitable shape for One-Sheet Hyperboloid Wind Energy Amplifier, according to the formulations described above, must be based on studies of prevailing wind force and energy where the windmill is located, as well as based on aerodynamics, parameters, performance and operational limits expected for a given wind system. In other words, there will be as many optimal shapes of One-Sheet Hyperboloid Wind Energy Amplifier, as wind systems are created. Determining the optimal geometrical shape of the One-Sheet Hyperboloid Wind Energy Amplifier must be based on, but not limited to, the following variables: (1) wind force and kinetic energy, (2) wind system aerodynamics, (3) One-Sheet Hyperboloid Wind Energy Amplifier aerodynamics, (4) expected wind system performances, (5) operational and structural limits of wind system engineering, (6) design and structural engineering of securing elements, and (7) pilots and results obtained from scale testing in wind tunnels.

**Claims**

1. A One-Sheet Hyperboloid Wind Energy Amplifier comprising four sections: an Amplifier Aerodynamic Body (1b), an Exit Turbulence Suppressor (4), an Entry Turbulence Suppressor (5), and a Supporting Structure or Securing Element (3d); wherein the Amplifier Aerodynamic Body (1b), the Exit Turbulence Suppressor (4) and the Entry Turbulence Suppressor (5) together form a single, continuous, rigid structure through which wind flows and is channeled to the windmill rotor (3e).

2. The One-Sheet Hyperboloid Wind Energy Amplifier, according to claim 1, wherein the sections of continuous and rigid structure are placed, ordered and coupled as follows, following the wind current direction: Wind entry opening (1c), Amplifier Aerodynamic Body (1b), Exit Turbulence Suppressor (4), and Wind exit opening (1a); wherein the Entry Turbulence Suppressor (5) externally surrounds all parts and sections described above, from the outer edge of the Amplifier Aerodynamic Body (5f) entry to the outer edge of the Exit Turbulence Suppressor (5e) exit.

3. The One-Sheet Hyperboloid Wind Energy Amplifier, according to claims 1 and 2, wherein the wind entry opening projected area is larger than that of the Amplifier Aerodynamic Body (1b) wind exit; wherein channeling a wind flow through the Amplifier Aerodynamic Body allows increasing wind pressure, speed and force.

4. The One-Sheet Hyperboloid Wind Energy Amplifier, according to claims 1 to 3, wherein the size of the Wind Energy Amplifier projected area and its aerodynamic shape affect the amplification of wind speed.

5. The One-Sheet Hyperboloid Wind Energy Amplifier, according to claims 1 to 4, the aerodynamic shape of the Amplifier Aerodynamic Body (1b) is governed by the following general mathematical equation:

$$(x^2)/a + (y^2)/a - (z^{(exponential)})/a - 1 = 0, a > 0, z > 0, (exponential) > 0$$

Where:

- (x, y, z) are Cartesian coordinates that make up the Wind Energy Amplifier dimensions, where (x, y, z) are interdependents.
- (x, y) determine the Wind Energy Amplifier range, which is interdependent of (z), where (x, y) can be any real number.
- (z) determines the Wind Energy Amplifier extension or length, such extension or length being interdependent of (x, y), where (z) is always greater than zero.
- (a) is a constant greater than zero, which influences the wind exit size and the circular shape of the Wind Energy Amplifier.
- (Exponential) determines the shape of the one-sheet hyperboloid, unfinished at the origin, being able to configure infinite hyperbolic shapes, where (exponential) acquires values greater than zero such as, but not limited to: (2), ($\pi$), (e), log2(n), log2(z), ln(z), ln(k. z), acos(n), atan(n); where "n" is a natural number greater than zero, "k" is a constant greater than zero, "z" is the same variable (z) repeated in the exponential.

6. The One-Sheet Hyperboloid Wind Energy Amplifier, according to claims 1 to 4, wherein the Amplifier Aerodynamic Body (1b) wind entry opening (1c) can take a circular (2a) or square shape (2b).

7. The One-Sheet Hyperboloid Wind Energy Amplifier, according to claims 1 to 4, wherein the two-dimensional shape of the Amplifier Aerodynamic Body (1b) wind exit opening (1a) is circular.

8. The One-Sheet Hyperboloid Wind Energy Amplifier, according to claims 1 to 7, wherein the Exit Turbulence Suppressor (4) is a cylindrical, short and rigid component, which is coupled to the Amplifier Aerodynamic Body (1b) wind exit opening (1a), and surrounds the propeller of a pre-existing wind system, reducing turbulence and providing better wind flow and movement.

9. The One-Sheet Hyperboloid Wind Energy Amplifier, according to claims 1 to 8, wherein the two-dimensional shape of the Exit Turbulence Suppressor (4), seen from a cross-section, has the same shape as the wind exit opening (1a), so as not to generate losses of wind energy exerted on the wind system propeller.

10. The One-Sheet Hyperboloid Wind Energy Amplifier, according to claims 1 to 9, wherein the diameter dimension of the cylindrical shape of the Exit Turbulence Suppressor (4a) is larger than the diameter covered by the wind system propeller (4b), but is sufficiently close to that same diameter so as to minimize wind energy losses, wherein the length of the Exit Turbulence Suppressor (4) is large enough to cover the entire length of the windmill rotor (4c) without exceeding it.

11. The One-Sheet Hyperboloid Wind Energy Amplifier, according to claims 1 to 10, wherein the general equation in Cartesian coordinates governing the Exit Turbulence Suppressor shape is that of a straight cylinder:

$$(x^2)/a + (y^2)/a - 1 = 0, \ a > 0, \ z > 0$$

Where:

• (x, y) are Cartesian coordinates configuring the dimensions of the Exit Turbulence Suppressor, where (x, y) are interdependent and can be any real number.
• (z) determines the extension of the Exit Turbulence Suppressor, this extension being independent of (x, y), where (z) can only be numbers below value (z) of the Amplifier Aerodynamic Body, but above zero, wherein the maximum value must be equal to the minimum value (z) of the Amplifier Aerodynamic Body, so that both values coincide;
• (a) is a constant, greater than zero, which modifies and determines the Exit Turbulence Suppressor cylindrical shape diameter.

12. The One-Sheet Hyperboloid Wind Energy Amplifier, according to claims 1 to 11, wherein the Entry Turbulence Suppressor (5) is an aerodynamic and rigid component coupled to the entry of the Amplifier' Aerodynamic Body and extends from the outer edge of the Amplifier Aerodynamic Body (5f) entry to the outer edge of the Exit Turbulence Suppressor (5e) exit, connecting both points through an outer edge (5d) and a leading edge (5g) with a specific radius (5a), externally surrounding the Amplifier Aerodynamic Body (1b); wherein the distance between the outer edge of the Exit Turbulence Suppressor (5e) and the outer edge of the Amplifier Aerodynamic Body (5f) is referred to as Chord (5b), wherein the average curvature line length (5c) is greater than the chord length (5b).

## FIGURE 1

**FIGURE 2**

## FIGURE 3

## FIGURE 4

3e  4

4

1

4b

4a

$d_0$  $d_1$

4c

1b

1a  1b

$d_1 > d_0$

FIGURE 5

**FIGURE 6**

6d

6

6d

4b

1d

d₁

d₁

4b

d₀

d₀

6b

1b

6c

1c

1a

6a

$d_1 > d_0$

# FIGURE 7

| Force | Dynamic Pressure | | | Projected area | Resistance coefficient |
|---|---|---|---|---|---|
| F (Newton) | (1/2) | $p$ | V | A | Cd |
| Kg.m/s$^2$ | constant | Kg./m$^3$ | m/s | m$^2$ | constant |
| 183.750 | 0.5 | 1.225 | 5 | 10 | 1.2 |
| 735.000 | 0.5 | 1.225 | 10 | 10 | 1.2 |
| 1,653.750 | 0.5 | 1.225 | 15 | 10 | 1.2 |
| 2,940.000 | 0.5 | 1.225 | 20 | 10 | 1.2 |
| 4,593.750 | 0.5 | 1.225 | 25 | 10 | 1.2 |
| 6,615.000 | 0.5 | 1.225 | 30 | 10 | 1.2 |
| 9,003.750 | 0.5 | 1.225 | 35 | 10 | 1.2 |
| 11,760.000 | 0.5 | 1.225 | 40 | 10 | 1.2 |
| 14,883.750 | 0.5 | 1.225 | 45 | 10 | 1.2 |
| 18,375.000 | 0.5 | 1.225 | 50 | 10 | 1.2 |

## FIGURE 8

| Effective power | Dynamic Pressure | | | Projected area | Conversion coefficient |
|---|---|---|---|---|---|
| P (KW) | (1/2) | $p$ | V | A | Cc |
| N.m/s | constant | Kg./m$^3$ | m/s | m$^2$ | constant |
| 0.3063 | 0.5 | 1.225 | 5 | 10 | 40% |
| 2.4500 | 0.5 | 1.225 | 10 | 10 | 40% |
| 8.2688 | 0.5 | 1.225 | 15 | 10 | 40% |
| 19.6000 | 0.5 | 1.225 | 20 | 10 | 40% |
| 38.2813 | 0.5 | 1.225 | 25 | 10 | 40% |
| 66.1500 | 0.5 | 1.225 | 30 | 10 | 40% |
| 105.0438 | 0.5 | 1.225 | 35 | 10 | 40% |
| 156.8000 | 0.5 | 1.225 | 40 | 10 | 40% |
| 223.2563 | 0.5 | 1.225 | 45 | 10 | 40% |
| 306.2500 | 0.5 | 1.225 | 50 | 10 | 40% |

# INTERNATIONAL SEARCH REPORT

| International application No. |
| --- |
| PCT/PE2017/000029 |

### A. CLASSIFICATION OF SUBJECT MATTER

*F03D1/04* (2006.01)

According to International Patent Classification (IPC) or to both national classification and IPC

### B. FIELDS SEARCHED

Minimum documentation searched (classification system followed by classification symbols)

F03D

Documentation searched other than minimum documentation to the extent that such documents are included in the fields searched

Electronic data base consulted during the international search (name of data base and, where practicable, search terms used)

EPODOC, INVENES

### C. DOCUMENTS CONSIDERED TO BE RELEVANT

| Category* | Citation of document, with indication, where appropriate, of the relevant passages | Relevant to claim No. |
| --- | --- | --- |
| A | US 2012261925 A1 (MERLINI III NICHOLAS C ET AL.) 18/10/2012, paragraphs[11 - 54]; figures. | 1-12 |
| A | US 2010187828 A1 (REIDY MICHAEL T ET AL.) 29/07/2010, paragraphs[64 - 65]; Fig. 4 | 1-12 |
| A | WO 2010005289 A2 (DONQI QUANDARY INNOVATIONS BV ET AL.) 14/01/2010, the whole document. | 1-12 |
| A | US 2013266446 A1 (PRESZ JR WALTER M ET AL.) 10/10/2013, the whole document. | 1-12 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 23/03/2018 | **(02/04/2018)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> M. López Carretero <br><br><br> Telephone No. 91 3498430 |

Form PCT/ISA/210 (second sheet) (January 2015)

## INTERNATIONAL SEARCH REPORT

Information on patent family members

International application No.

PCT/PE2017/000029

| Patent document cited in the search report | Publication date | Patent family member(s) | Publication date |
|---|---|---|---|
| US2010187828 A1 | 29.07.2010 | NONE | |
| US2012261925 A1 | 18.10.2012 | US2013175804 A1<br>US9194362 B2<br>US2012183387 A1<br>US8794903 B2<br>WO2009029691 A1<br>US2008150292 A1<br>US8257019 B2 | 11.07.2013<br>24.11.2015<br>19.07.2012<br>05.08.2014<br>05.03.2009<br>26.06.2008<br>04.09.2012 |
| WO2010005289 A2 | 14.01.2010 | NONE | |
| US2013266446 A1 | 10.10.2013 | WO2013155151 A2<br>WO2013155151 A3 | 17.10.2013<br>28.11.2013 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RO 130435 A2